(19) Europäisches Patentamt
European Patent Office
Office européen des brevets

(11) **EP 2 852 099 A1**

(12) **EUROPEAN PATENT APPLICATION**
published in accordance with Art. 153(4) EPC

(43) Date of publication:
**25.03.2015 Bulletin 2015/13**

(21) Application number: **13830684.0**

(22) Date of filing: **08.08.2013**

(51) Int Cl.:
*H04L 12/26* (2006.01)      *G10L 25/27* (2013.01)
*G10L 19/00* (2013.01)

(86) International application number:
**PCT/CN2013/081071**

(87) International publication number:
**WO 2014/029275 (27.02.2014 Gazette 2014/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.08.2012   CN 201210298856**

(71) Applicant: **Huawei Technologies Co., Ltd.**
**Longgang District**
**Shenzhen, Guangdong 518129 (CN)**

(72) Inventors:
• **GAO, Shan**
  **Shenzhen**
  **Guangdong 518129 (CN)**
• **SUN, Lina**
  **Shenzhen**
  **Guangdong 518129 (CN)**
• **YANG, Fuzheng**
  **Shenzhen**
  **Guangdong 518129 (CN)**

(74) Representative: **Haley, Stephen**
**Gill Jennings & Every LLP**
**The Broadgate Tower**
**20 Primrose Street**
**London EC2A 2ES (GB)**

(54) **METHOD AND APPARATUS FOR EVALUATING QUALITY OF AUDIO STREAM**

(57)   Embodiments of the present invention provide a method and an apparatus for evaluating audio stream quality, where the method for evaluating audio stream quality includes: determining a non-silence audio data packet in a to-be-evaluated audio stream, where the to-be-evaluated audio stream includes at least one non-silence audio data packet, and each non-silence audio data packet includes at least one non-silence audio frame; and evaluating the non-silence audio data packet in the to-be-evaluated audio stream to generate audio quality evaluation information. The method and the apparatus for evaluating audio stream quality provided by the embodiments of the present invention can avoid impact of a silence part on evaluation of audio quality, thereby improving accuracy of evaluating audio stream quality.

```
┌─────────────────────────────────────────────┐
│ Determine a non-silence audio data packet    │   10
│ in a to-be-evaluated audio stream             │
└─────────────────────────────────────────────┘
                      │
                      ▼
┌─────────────────────────────────────────────┐
│ Evaluate the non-silence audio data packet    │   20
│ in the to-be-evaluated audio stream to         │
│ generate audio quality evaluation information  │
└─────────────────────────────────────────────┘
```

FIG. 1

EP 2 852 099 A1

**Description**

**TECHNICAL FIELD**

Embodiments of the present invention relate to network audio technologies, and in particular, to a method and an apparatus for evaluating audio stream quality.

**BACKGROUND**

In recent years, rapid development of a digital network and a super-large-scale integrated circuit technology has resulted in constant emergence of various audio processing technologies and audio transmission technologies. Subjective feelings of communication users and consumers for audio ultimately depend on audio quality, and therefore, audio and video quality assessment becomes an increasingly important research topic. Network audio transmission technologies have become a significant application and undertake an increasing number of audio communication tasks. In a process of audio transmission, due to multiple network factors, a packet loss occurs in audio and affects audio quality consequently. Accurate and reliable measurement and evaluation of network audio quality is a fairly key problem in network measurement and network planning and design.

In the prior art, a method for evaluating audio quality is generally performed according to a transmission status of all audio data packets in a section of an audio stream, and an evaluation result is inaccurate.

**SUMMARY**

Embodiments of the present invention provide a method and an apparatus for evaluating audio stream quality, so as to improve accuracy of evaluating audio stream quality.

According to a first aspect, an embodiment of the present invention provides a method for evaluating audio stream quality, including:

determining a non-silence audio data packet in a to-be-evaluated audio stream, where the to-be-evaluated audio stream includes at least one non-silence audio data packet, and each non-silence audio data packet includes at least one non-silence audio frame; and
evaluating the non-silence audio data packet in the to-be-evaluated audio stream to generate audio quality evaluation information.

In a first possible implementation manner, the evaluating the non-silence audio data packet in the to-be-evaluated audio stream to generate audio quality evaluation information includes:

determining a bit rate of the non-silence audio data packet in the to-be-evaluated audio stream, and acquiring code compression quality information according to the bit rate; and
determining packet loss status information of the non-silence audio data packet in the to-be-evaluated audio stream, and generating the audio quality evaluation information according to the code compression quality information and the packet loss status information.

With reference to the first possible implementation manner of the first aspect, in a second possible implementation manner, the determining a bit rate of the non-silence audio data packet in the to-be-evaluated audio stream is specifically:

determining a sum of bits of all non-silence audio frames included in the non-silence audio data packet in the to-be-evaluated audio stream and a sum of time lengths of all the non-silence audio frames, and generating the bit rate according to the sum of bits and the sum of time lengths.

With reference to the first or second implementation manner of the first aspect, in a third possible implementation manner, the determining packet loss status information of the non-silence audio data packet in the to-be-evaluated audio stream, and generating the audio quality evaluation information according to the code compression quality information and the packet loss status information is specifically:

determining a packet loss rate of the non-silence audio data packet in the to-be-evaluated audio stream, and generating the audio quality evaluation information according to the code compression quality information and the packet loss rate.

With reference to the third possible implementation manner of the first aspect, in a fourth possible implementation manner, the determining a packet loss rate of the non-silence audio data packet in the to-be-evaluated audio stream is specifically:

determining the total number of lost audio data packets and the number of lost silence audio data packets in the to-be-evaluated audio stream, determining the number of lost non-silence audio data packets according to the total number of the lost audio data packets and the number of the lost silence audio data packets, and generating the packet loss rate according to the number of the lost non-silence audio data packets and the number of non-silence audio data packets in the to-be-evaluated audio stream.

With reference to the third possible implementation manner of the first aspect, in a fifth possible implementation manner, the generating the audio quality evaluation information according to the code compression quality information and the packet loss rate is specifically:

calculating the audio quality evaluation information Q by applying the following formula:

$$Q = Q_c - a_1 \cdot Q_c \cdot e^{a_2 PLR},$$

where $Q_c$ is the code compression quality information, PLR is the packet loss rate, and $a_1$ and $a_2$ are separately a preset coefficient.

With reference to the first or second implementation manner of the first aspect, in a sixth possible implementation manner, the packet loss status information is loss frequency; and
the determining packet loss status information of the non-silence audio data packet in the to-be-evaluated audio stream, and generating the audio quality evaluation information according to the code compression quality information and the packet loss status information is specifically:
determining loss frequency of the non-silence audio data packet in the to-be-evaluated audio stream, and generating the audio quality evaluation information according to the code compression quality information and the loss frequency.
With reference to the sixth possible implementation manner of the first aspect, in a seventh possible implementation manner, the determining loss frequency of the non-silence audio data packet in the to-be-evaluated audio stream is specifically:

determining the number of loss times of the non-silence audio data packet in the to-be-evaluated audio stream, determining the sum of time lengths of all the non-silence audio frames included in the non-silence audio data packet in the to-be-evaluated audio stream, and generating the loss frequency according to the number of loss times and the sum of time lengths of all the non-silence audio frames.

With reference to the sixth possible implementation manner of the first aspect, in an eighth possible implementation manner, the generating the audio quality evaluation information according to the code compression quality information and the loss frequency is specifically:

calculating the audio quality evaluation information Q by applying the following formula:

$$Q = Q_c - a_3 \cdot Q_c \cdot e^{a_4 LR},$$

where $Q_c$ is the code compression quality information, LR is the loss frequency, and $a_3$ and $a_4$ are separately a preset coefficient.

With reference to the first or second implementation manner of the first aspect, in a ninth possible implementation manner, the packet loss status information is an average loss length; and
the determining packet loss status information of the non-silence audio data packet in the to-be-evaluated audio stream, and generating the audio quality evaluation information according to the code compression quality information and the packet loss status information is specifically:
determining an average loss length of the non-silence audio data packet in the to-be-evaluated audio stream, and generating the audio quality evaluation information according to the code compression quality information and the average loss length.

With reference to the ninth possible implementation manner of the first aspect, in a tenth possible implementation manner, the determining an average loss length of the non-silence audio data packet in the to-be-evaluated audio stream is specifically:

determining a lost non-silence audio data packet in the to-be-evaluated audio stream, determining a sum of time lengths of the lost non-silence audio data packet, determining the number of loss times of the non-silence audio data packet in the to-be-evaluated audio stream, and generating the average loss length according to the sum of time lengths and the number of loss times.

With reference to the ninth possible implementation manner of the first aspect, in an eleventh possible implementation manner, the generating the audio quality evaluation information according to the code compression quality information and the loss frequency is specifically:

calculating the audio quality evaluation information Q by applying the following formula:

$$Q = Q_c - a_5 \cdot Q_c \cdot e^{a_6 LD},$$

where $Q_c$ is the code compression quality information, LD is the average loss length, and $a_5$ and $a_6$ are separately a preset coefficient.

According to a second aspect, an embodiment of the present invention provides an apparatus for evaluating audio stream quality, including:

a non-silence determining unit, configured to determine a non-silence audio data packet in a to-be-evaluated audio stream, where the to-be-evaluated audio stream includes at least one non-silence audio data packet, and each non-silence audio data packet includes at least one non-silence audio frame; and

an evaluation unit, connected to the non-silence determining unit and configured to evaluate the non-silence audio data packet in the to-be-evaluated audio stream to generate audio quality evaluation information.

In a first possible implementation manner, the evaluation unit includes:

an acquiring sub-unit, connected to the non-silence determining unit and configured to determine a bit rate of the non-silence audio data packet in the to-be-evaluated audio stream, and acquire code compression quality information according to the bit rate; and

an evaluation sub-unit, connected to the acquiring sub-unit and configured to determine packet loss status information of the non-silence audio data packet in the to-be-evaluated audio stream, and generate the audio quality evaluation information according to the code compression quality information and the packet loss status information.

With reference to the first possible implementation manner of the second aspect, in a second possible implementation manner, the acquiring sub-unit is further configured to determine a sum of bits of all non-silence audio frames included in the non-silence audio data packet in the to-be-evaluated audio stream and a sum of time lengths of all the non-silence audio frames, and generate the bit rate according to the sum of bits and the sum of time lengths.

With reference to the first or second implementation manner of the second aspect, in a third possible implementation manner, the packet loss status information is a packet loss rate; and

the evaluation sub-unit is further configured to determine a packet loss rate of the non-silence audio data packet in the to-be-evaluated audio stream, and generate the audio quality evaluation information according to the code compression quality information and the packet loss rate.

With reference to the third implementation manner of the second aspect, in a fourth possible implementation manner, the evaluation sub-unit is further configured to determine the total number of lost audio data packets and the number of lost silence audio data packets in the to-be-evaluated audio stream, determine the number of lost non-silence audio data packets according to the total number of the lost audio data packets and the number of the lost silence audio data packets, and generate the packet loss rate according to the number of the lost non-silence audio data packets and the number of non-silence audio data packets in the to-be-evaluated audio stream.

With reference to the third implementation manner of the second aspect, in a fifth possible implementation manner, the evaluation sub-unit is further configured to calculate the audio quality evaluation information Q by applying the following formula:

$$Q = Q_c - a_1 \cdot Q_c \cdot e^{a_2 PLR},$$

where $Q_c$ is the code compression quality information, PLR is the packet loss rate, and $a_1$ and $a_2$ are separately a preset coefficient.

With reference to the first or second implementation manner of the second aspect, in a sixth possible implementation manner, the packet loss status information is loss frequency; and
the evaluation sub-unit is further configured to determine loss frequency of the non-silence audio data packet in the to-be-evaluated audio stream, and generate the audio quality evaluation information according to the code compression quality information and the loss frequency.

With reference to the sixth implementation manner of the second aspect, in a seventh possible implementation manner, the evaluation sub-unit is further configured to determine the number of loss times of the non-silence audio data packet in the to-be-evaluated audio stream, determine the sum of time lengths of all the non-silence audio frames included in the non-silence audio data packet in the to-be-evaluated audio stream, and generate the loss frequency according to the number of loss times and the sum of time lengths of all the non-silence audio frames.

With reference to the sixth implementation manner of the second aspect, in an eighth possible implementation manner, the evaluation sub-unit is further configured to calculate the audio quality evaluation information Q by applying the following formula:

$$Q = Q_c - a_3 \cdot Q_c \cdot e^{a_4 LR},$$

where $Q_c$ is the code compression quality information, LR is the loss frequency, and $a_3$ and $a_4$ are separately a preset coefficient.

With reference to the first or second implementation manner of the second aspect, in a ninth possible implementation manner, the packet loss status information is an average loss length; and
the evaluation sub-unit is further configured to determine an average loss length of the non-silence audio data packet in the to-be-evaluated audio stream, and generate the audio quality evaluation information according to the code compression quality information and the average loss length.

With reference to the ninth implementation manner of the second aspect, in a tenth possible implementation manner, the evaluation sub-unit is further configured to determine a lost non-silence audio data packet in the to-be-evaluated audio stream, determine a sum of time lengths of the lost non-silence audio data packet, determine the number of loss times of the non-silence audio data packet in the to-be-evaluated audio stream, and generate the average loss length according to the sum of time lengths and the number of loss times.

With reference to the ninth implementation manner of the second aspect, in an eleventh possible implementation manner, the evaluation sub-unit is further configured to calculate the audio quality evaluation information Q by applying the following formula:

$$Q = Q_c - a_5 \cdot Q_c \cdot e^{a_6 LD},$$

where $Q_c$ is the code compression quality information, LD is the average loss length, and $a_5$ and $a_6$ are separately a preset coefficient.

It can be learned from the foregoing technical solutions that, in the method and the apparatus for evaluating audio stream quality according to the embodiments of the present invention, the apparatus for evaluating audio stream quality determines a non-silence audio data packet in a to-be-evaluated audio stream, where the to-be-evaluated audio stream includes at least one non-silence audio data packet, and each non-silence audio data packet includes at least one non-silence audio frame; and evaluates the non-silence audio data packet in the to-be-evaluated audio stream to generate audio quality evaluation information. Because a silence audio data packet does not include any useful information, audio stream quality evaluation is performed only on a non-silence audio data packet in a to-be-evaluated audio stream, which can avoid impact of a silence part on evaluation of audio quality, thereby improving accuracy of evaluating audio stream quality.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of a method for evaluating audio stream quality according to an embodiment of the present invention;
FIG. 2 is a flowchart of another method for evaluating audio stream quality according to an embodiment of the present invention;
FIG. 3 is a schematic structural diagram of an apparatus for evaluating audio stream quality according to an embodiment of the present invention; and
FIG. 4 is a schematic structural diagram of another apparatus for evaluating audio stream quality according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

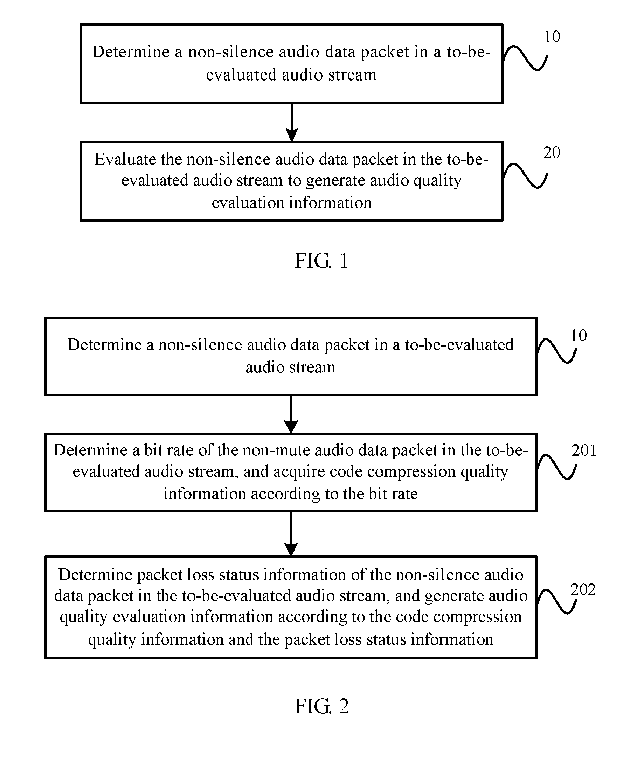

FIG. 1 is a flowchart of a method for evaluating audio stream quality according to an embodiment of the present invention. As shown in FIG. 1, the method for evaluating audio stream quality according to this embodiment of the present invention may specifically be applied to a process of evaluating quality of an audio stream, and in particular, of a network audio stream. The network audio stream is specifically an audio stream transmitted over a network. The method for evaluating audio stream quality according to this embodiment of the present invention may be executed by an apparatus for evaluating audio stream quality, where the apparatus for evaluating audio stream quality may be implemented in a manner of software and/or hardware.

The method for evaluating audio stream quality according to this embodiment of the present invention specifically includes:

Step 10: Determine a non-silence audio data packet in a to-be-evaluated audio stream, where the to-be-evaluated audio stream includes at least one non-silence audio data packet, and each non-silence audio data packet includes at least one non-silence audio frame.

Step 20: Evaluate the non-silence audio data packet in the to-be-evaluated audio stream to generate audio quality evaluation information.

Specifically, when quality evaluation is performed on a section of an audio stream, the section of the audio stream is namely a to-be-evaluated audio stream, where the to-be-evaluated audio stream is specifically an audio stream compliant with a preset speech coding standard, and the preset speech coding standard may be an Adaptive Multi-Rate (Adaptive Multi-Rate, AMR for short) coding standard, an Advanced Audio Coding (Advanced Audio Coding, AAC for short) standard, or a High-Efficiency Advanced Audio Coding (High Efficiency Advanced Audio Coding, HEAAC for short) standard, or the like. The to-be-evaluated audio stream includes multiple audio data packets, where each audio data packet includes a packet header and an audio payload, and the audio payload includes at least one audio frame. Each audio data packet in the to-be-evaluated audio stream includes the same number of audio frames.

An audio stream often has a silence part, for example, a talk interval, and therefore, audio data packets may be classified into two types: non-silence audio data packet and silence audio data packet. When audio frames in an audio data packet are all silence audio frames, the audio data packet is a silence audio data packet; and when at least one non-silence audio frame exists in an audio data packet, the audio data packet is a non-silence audio data packet. Because a silence frame does not include any useful information, and loss of a silence frame does not affect audio stream quality either, when audio data packets in a to-be-evaluated audio stream are all silence audio data packets, no quality evaluation is performed on the to-be-evaluated audio stream.

In a process of actual application, the numbers of compressed bytes of non-silence audio frames in an audio stream, which is processed by different speech coding standards, are different. For example, Table 1 lists the number of compressed bytes of each non-silence audio frame in different coding modes when an AMR coding standard is used. In addition, because a length of a silence audio frame is much less than a length of a non-silence audio frame, whether an audio data packet is a non-silence audio data packet or a silence audio data packet may be determined according to a length of an audio payload in the audio data packet.

**Table 1**

| Coding mode | Coding rate (kb/s) | Length of a non-silence audio frame (Byte) |
| --- | --- | --- |
| AMR475 | 4.75 | 14 |
| AMR515 | 5.15 | 15 |
| AMR59 | 5.9 | 17 |
| AMR67 | 6.7 | 19 |
| AMR74 | 7.4 | 21 |
| AMR795 | 7.95 | 22 |
| AMR102 | 10.2 | 28 |
| AMR122 | 12.2 | 33 |

All non-silence audio data packets in the to-be-evaluated audio stream are evaluated to generate audio quality evaluation information. Evaluation of audio quality of a non-silence part in the to-be-evaluated audio stream may be specifically implemented by using a G.1070 audio quality evaluation method, and may also be implemented by using another method for evaluating audio quality.

In the method for evaluating audio stream quality according to this embodiment of the present invention, an apparatus for evaluating audio stream quality determines a non-silence audio data packet in a to-be-evaluated audio stream, where the to-be-evaluated audio stream includes at least one non-silence audio data packet, and each non-silence audio data packet includes at least one non-silence audio frame; and evaluates the non-silence audio data packet in the to-be-evaluated audio stream to generate audio quality evaluation information. Because a silence audio data packet does not include any useful information, audio stream quality evaluation is performed only on a non-silence audio data packet in a to-be-evaluated audio streamsilence, which can avoid impact of a silence part on evaluation of audio quality, thereby improving accuracy of evaluating audio stream quality.

FIG. 2 is a flowchart of another method for evaluating audio stream quality according to an embodiment of the present invention. As shown in FIG. 2, in this embodiment, the step 20 of evaluating the non-silence audio data packet in the to-be-evaluated audio stream to generate audio quality evaluation information may specifically include:

Step 201: Determine a bit rate of the non-silence audio data packet in the to-be-evaluated audio stream, and acquire code compression quality information according to the bit rate.

Step 202: Determine packet loss status information of the non-silence audio data packet in the to-be-evaluated audio stream, and generate the audio quality evaluation information according to the code compression quality information and the packet loss status information.

Specifically, code compression quality information varies with different speech coding standards. The code compression quality information may reflect a status of code compression quality according to the speech coding standard, and may also reflect a status of audio quality when no audio data packet is lost in an audio stream in a process of audio transmission. A correspondence between a bit rate and code compression quality information may be preset according to experiment data. A bit rate of the non-silence audio data packet in the to-be-evaluated audio stream is determined, and code compression quality information corresponding to the bit rate is acquired.

Packet loss status information of the non-silence audio data packet in the to-be-evaluated audio stream may specifically include information such as a packet loss rate, loss frequency or an average loss length. The packet loss status information of the non-silence audio data packet is used to indicate a packet loss condition of the non-silence audio data packet. In a process of evaluating audio quality of the to-be-evaluated audio stream, only a packet loss condition of the non-silence audio data packet is considered, which can avoid impact of loss of a silence audio data packet on evaluation of audio quality, thereby improving accuracy of evaluating audio quality.

In this embodiment, the step 201 of determining a bit rate of the non-silence audio data packet in the to-be-evaluated audio stream may specifically be:

determining a sum of bits of all non-silence audio frames included in the non-silence audio data packet in the to-be-evaluated audio stream and a sum of time lengths of all the non-silence audio frames, and generating the bit rate according to the sum of bits and the sum of time lengths.

Specifically, information included in a packet header part of an audio data packet is fixed according to a preset speech coding standard, where a packet header of an audio data packet generally includes a Real-Time Transport Protocol (Real-time Transport Protocol, RTP for short) header, a User Datagram Protocol (User Datagram Protocol, UDP for short) header, and an Internet Protocol (Internet Protocol, IP for short) header. If the preset speech coding standard is a speech coding standard applicable to a broadcast domain, a packet header of an audio data packet may further include a transport stream (Transport Stream, TS for short) header. Lengths of an RTP header, a UDP header, an IP header, and a TS header are fixed, and a length of a packet header may be determined according to the lengths of the RTP header, the UDP header, the IP header and the TS header. An effective length of an audio payload in an audio data packet may be obtained by subtracting the length of the packet header from a total length of the audio data packet. For each non-silence audio data packet, because the number of audio frames included in an audio payload is definite, and a length of a non-silence audio frame is definite, the number and bits of non-silence audio frames may be determined. A time length of a non-silence audio data packet may be determined according to a timestamp of an RTP header in the packet header of the non-silence audio data packet, and further, a time length of a non-silence audio frame in the non-silence audio data packet may be determined. Therefore, a bit rate R is calculated by applying the following formula:

$$R = \frac{\sum_{i=1}^{M} B_i}{\sum_{i=1}^{M} Duration_i},$$

where M is the number of non-silence audio frames in the to-be-evaluated audio stream, $B_i$ is the number of bits of the $i^{th}$ non-silence audio frame, and $Duration_i$ is a time length of the $i^{th}$ non-silence audio frame.

In this embodiment, the packet loss status information is a packet loss rate. The step 202 of determining packet loss status information of the non-silence audio data packet in the to-be-evaluated audio stream, and generating the audio quality evaluation information according to the code compression quality information and the packet loss status information may specifically be:

determining a packet loss rate of the non-silence audio data packet in the to-be-evaluated audio stream, and generating the audio quality evaluation information according to the code compression quality information and the packet loss rate.

In this embodiment, the determining a packet loss rate of the non-silence audio data packet in the to-be-evaluated audio stream may specifically be:

determining the total number of lost audio data packets and the number of lost silence audio data packets in the to-be-evaluated audio stream, determining the number of lost non-silence audio data packets according to the total number of the lost audio data packets and the number of the lost silence audio data packets, and generating the packet loss rate according to the number of the lost non-silence audio data packets and the number of non-silence audio data packets in the to-be-evaluated audio stream.

Specifically, an RTP header in a packet header of an audio data packet has a serial number field to indicate a sequence of the audio data packet, and the total number of lost audio data packets may be determined according to a serial number field of an RTP header of each audio data packet in the to-be-evaluated audio stream. If two audio data packets adjacent to a lost audio data packet are both silence audio data packets, the lost audio data packet is a silence audio data packet. For example, serial numbers of audio data packets in the to-be-evaluated audio stream are separately 1, 2, 3, 5 and 6. Then, it may be determined that an audio data packet with a serial number 4 is lost. If audio data packets with serial numbers 3 and 5 are both silence audio data packets, the lost audio data packet with the serial number 4 is also a silence audio data packet, and therefore, the number of lost silence audio data packets may be determined. The number of lost non-silence audio data packets is obtained by subtracting the number of lost silence audio data packets from the total number of lost audio data packets.

A packet loss rate PLR is calculated by applying the following formula:

$$PLR = \frac{N1}{N2},$$

where N1 the number of lost non-silence audio data packets, and N2 is the number of non-silence audio data packets in the to-be-evaluated audio stream.

In this embodiment, the generating the audio quality evaluation information according to the code compression quality information and the packet loss rate may specifically be:

calculating the audio quality evaluation information Q by applying the following formula:

$$Q = Q_c - a_1 \cdot Q_c \cdot e^{a_2 PLR},$$

where $Q_c$ is the code compression quality information, PLR is the packet loss rate, and $a_1$ and $a_2$ are separately a preset coefficient.

Specifically, $a_1$ and $a_2$ are preset coefficients, and may be obtained by training a training database.

In this embodiment, the packet loss status information is loss frequency. The step 202 of determining packet loss status information of the non-silence audio data packet in the to-be-evaluated audio stream, and generating the audio quality evaluation information according to the code compression quality information and the packet loss status information may specifically be:

determining loss frequency of the non-silence audio data packet in the to-be-evaluated audio stream, and generating the audio quality evaluation information according to the code compression quality information and the loss frequency.

In this embodiment, the determining loss frequency of the non-silence audio data packet in the to-be-evaluated audio stream may specifically be:

determining the number of loss times of the non-silence audio data packet in the to-be-evaluated audio stream, determining the sum of time lengths of all the non-silence audio frames included in the non-silence audio data packet in the to-be-evaluated audio stream, and generating the loss frequency according to the number of loss times and the sum of time lengths of all the non-silence audio frames.

Specifically, the number of loss times of the non-silence audio data packet is the total number of times of occurrence of packet loss events of the non-silence audio data packet included in the to-be-evaluated audio stream, and continuous packet losses belong to one packet loss event. For example, audio data packets with serial numbers 1, 2, 3, 6, 8 and 9 respectively are all non-silence audio data packets, and serial numbers of lost non-silence audio data packets are 4, 5 and 7 respectively. Even if the number of lost non-silence audio data packets is 3, non-silence audio data packets with serial numbers 4 and 5 are continuous audio data packets, and therefore, the number of loss times of the non-silence audio data packets is 2.

Loss frequency LR is calculated by applying the following formula:

$$LR = \frac{N3}{\sum_{i=1}^{M} Duration_i},$$

where N3 is the number of loss times of a non-silence audio data packet, M is the number of non-silence audio frames in the to-be-evaluated audio stream, and Duration; is a time length of the $i^{th}$ non-silence audio frame.

In this embodiment, the generating the audio quality evaluation information according to the code compression quality information and the loss frequency may specifically be:

calculating the audio quality evaluation information Q by applying the following formula:

$$Q = Q_c - a_3 \cdot Q_c \cdot e^{a_4 LR},$$

where $Q_c$ is the code compression quality information, LR is the loss frequency, and $a_3$ and $a_4$ are separately a

preset coefficient.

Specifically, $a_3$ and $a_4$ are preset coefficients, and may be obtained by training a training database.

In this embodiment, the packet loss status information is an average loss length; and the determining packet loss status information of the non-silence audio data packet in the to-be-evaluated audio stream, and generating the audio quality evaluation information according to the code compression quality information and the packet loss status information may specifically be:

determining an average loss length of the non-silence audio data packet in the to-be-evaluated audio stream, and generating the audio quality evaluation information according to the code compression quality information and the average loss length.

In this embodiment, the determining an average loss length of the non-silence audio data packet in the to-be-evaluated audio stream may specifically be:

determining a lost non-silence audio data packet in the to-be-evaluated audio stream, determining a sum of time lengths of the lost non-silence audio data packet, determining the number of loss times of the non-silence audio data packet in the to-be-evaluated audio stream, and generating the average loss length according to the sum of time lengths and the number of loss times.

Specifically, an RTP header in a packet header of an audio data packet has a serial number field to indicate a sequence of the audio data packet, and a lost audio data packet may be determined according to a serial number field of an RTP header of each audio data packet in the to-be-evaluated audio stream. If two audio data packets adjacent to a lost audio data packet are both silence audio data packets, the lost audio data packet is a silence audio data packet. A lost non-silence audio data packet is determined by determining the lost silence audio data packet. A sum of time lengths of the lost non-silence audio data packet may be determined according to a timestamp of an RTP header of an audio data packet in the to-be-evaluated audio stream.

The number of loss times of the non-silence audio data packet is the total number of times of occurrence of packet loss events of the non-silence audio data packet included in the to-be-evaluated audio stream, and continuous packet losses belong to one packet loss event. For example, audio data packets with serial numbers 1, 2, 3, 6, 8 and 9 respectively are all non-silence audio data packets, and serial numbers of lost non-silence audio data packets are 4, 5 and 7 respectively. Even if the number of lost non-silence audio data packets is 3, non-silence audio data packets with serial numbers 4 and 5 are continuous audio data packets, and therefore, the number of loss times of the non-silence audio data packets is 2.

An average loss length LD is calculated by applying the following formula:

$$LD = \frac{T1}{N3},$$

where T1 is a sum of time lengths of a lost non-silence audio data packet, and N3 is the number of loss times of a lost non-silence audio data packet.

In this embodiment, the generating the audio quality evaluation information according to the code compression quality information and the average loss length may specifically be:

calculating the audio quality evaluation information Q by applying the following formula:

$$Q = Q_c - a_5 \cdot Q_c \cdot e^{a_6 LD},$$

where $Q_c$ is the code compression quality information, LD is the average loss length, and $a_5$ and $a_6$ are separately a preset coefficient.

Specifically, $a_5$ and $a_6$ are preset coefficients, and may be obtained by training a training database.

In a process of actual application, packet loss status information of a non-silence audio data packet may further include another information that can reflect a packet loss condition of the non-silence audio data packet, which is not limited in this embodiment. Correspondingly, a manner of generating the audio quality evaluation information according to code compression quality information and packet loss status information may also be another manner, which is not limited in this embodiment.

For example, packet loss status information of a non-silence audio data packet may include loss frequency and a loss length. Loss frequency and a loss length may be obtained by using the method provided in the foregoing embodiment, and may also be obtained in another manner. For example, loss frequency $LR = \dfrac{N3}{T1}$, where N3 is the number of loss times of a non-silence audio data packet, and T1 is a sum of time lengths of a lost non-silence audio data packet. Loss length $LD = \dfrac{N1}{N3}$, where N1 the number of lost non-silence audio data packets, and N3 is the number of loss times of a non-silence audio data packet.

the audio quality evaluation information Q is calculated by applying the following formula:

$$Q = (Q_C - 1)((1 - a_{11})e^{-VgLR/a_{12}} + a_{11}e^{-VgLR/a_{13}}) + 1,$$

$$V = a_{14}(LD\text{-}1) + 1,$$

where $Q_c$ is the code compression quality information, and $a_{11}$, $a_{12}$, $a_{13}$ and $a_{14}$ are preset coefficients and may be obtained by training a training database. For example, in a model parameter of an AAC bit stream, $a_{11}$=0.5145, $a_{12}$=106658, $a_{13}$=5.0921, and $a_{14}$=0.0560.

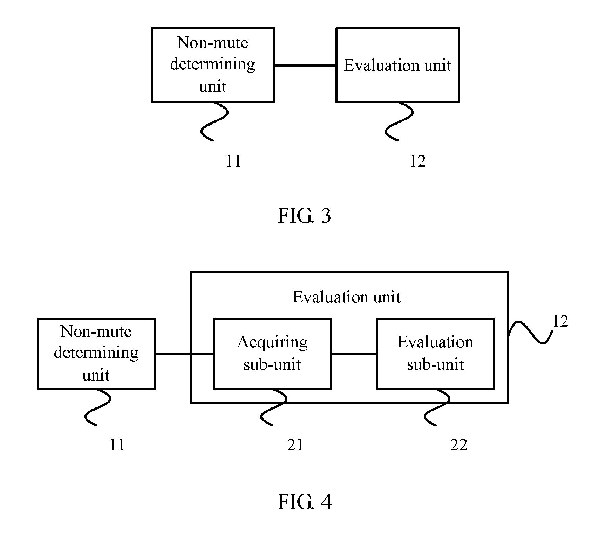

FIG. 3 is a schematic structural diagram of an apparatus for evaluating audio stream quality according to an embodiment of the present invention. As shown in FIG. 3, the apparatus for evaluating audio stream quality according to this embodiment may implement the steps of the method for evaluating the audio stream quality according to any embodiment of the present invention, and is not described any further herein. The apparatus for evaluating audio stream quality according to this embodiment specifically includes a non-silence determining unit 11 and an evaluation unit 12. The non-silence determining unit 11 is configured to determine a non-silence audio data packet in a to-be-evaluated audio stream, where the to-be-evaluated audio stream includes at least one non-silence audio data packet, and each non-silence audio data packet includes at least one non-silence audio frame. The evaluation unit 12 is connected to the non-silence determining unit 11, and configured to evaluate the non-silence audio data packet in the to-be-evaluated audio stream to generate audio quality evaluation information.

In the apparatus for evaluating audio stream quality according to this embodiment, the non-silence determining unit 11 determines a non-silence audio data packet in a to-be-evaluated audio stream, where the to-be-evaluated audio stream includes at least one non-silence audio data packet, and each non-silence audio data packet includes at least one non-silence audio frame; and the evaluation unit 12 evaluates the non-silence audio data packet in the to-be-evaluated audio stream to generate audio quality evaluation information. Because a silence audio data packet does not include any useful information, audio stream quality evaluation is performed only on a non-silence audio data packet in a to-be-evaluated audio streamsilence, which can avoid impact of a silence part on evaluation of audio quality, thereby improving accuracy of evaluating audio stream quality.

FIG. 4 is a schematic structural diagram of another apparatus for evaluating audio stream quality according to an embodiment of the present invention. As shown in FIG. 4, in this embodiment, the evaluation unit 12 may specifically include an acquiring sub-unit 21 and an evaluation sub-unit 22. The acquiring sub-unit 21 is connected to the non-silence determining unit 11 and configured to determine a bit rate of the non-silence audio data packet in the to-be-evaluated audio stream, and acquire code compression quality information according to the bit rate. The evaluation sub-unit 22 is connected to the acquiring sub-unit 21 and configured to determine packet loss status information of the non-silence audio data packet in the to-be-evaluated audio stream, and generate the audio quality evaluation information according to the code compression quality information and the packet loss status information.

Packet loss status information of the non-silence audio data packet in the to-be-evaluated audio stream may specifically include information such as a packet loss rate, loss frequency or an average loss length. The packet loss status information of the non-silence audio data packet is used to indicate a packet loss condition of the non-silence audio data packet. In a process of evaluating audio quality of the to-be-evaluated audio stream, only a packet loss condition of the non-silence audio data packet is considered, which can avoid impact of loss of a silence audio data packet on evaluation of audio quality, thereby improving accuracy of evaluating audio quality.

In this embodiment, the acquiring sub-unit 21 is further configured to determine a sum of bits of all non-silence audio frames included in the non-silence audio data packet in the to-be-evaluated audio stream and a sum of time lengths of all the non-silence audio frames, and generate the bit rate according to the sum of bits and the sum of time lengths.

In this embodiment, the packet loss status information is a packet loss rate; and the evaluation sub-unit 22 is further configured to determine a packet loss rate of non-silence audio data packet in the to-be-evaluated audio stream, and generate the audio quality evaluation information according to the code compression quality information and the packet loss rate.

In this embodiment, the evaluation sub-unit 22 is further configured to determine the total number of lost audio data packets and the number of lost silence audio data packets in the to-be-evaluated audio stream, determine the number of lost non-silence audio data packets according to the total number of the lost audio data packets and the number of the lost silence audio data packets, and generate the packet loss rate according to the number of the lost non-silence audio data packets and the number of non-silence audio data packets in the to-be-evaluated audio stream.

In this embodiment, the evaluation sub-unit 22 is further configured to calculate the audio quality evaluation information Q by applying the following formula:

$$Q = Q_c - a_1 \cdot Q_c \cdot e^{a_2 PLR},$$

where $Q_c$ is the code compression quality information, PLR is the packet loss rate, and $a_1$ and $a_2$ are separately a preset coefficient.

In this embodiment, the packet loss status information is loss frequency; and the evaluation sub-unit 22 is further configured to determine loss frequency of the non-silence audio data packet in the to-be-evaluated audio stream, and generate the audio quality evaluation information according to the code compression quality information and the loss frequency.

In this embodiment, the evaluation sub-unit 22 is further configured to determine the number of loss times of the non-silence audio data packet in the to-be-evaluated audio stream, determine the sum of time lengths of all the non-silence audio frames included in the non-silence audio data packet in the to-be-evaluated audio stream, and generate the loss frequency according to the number of loss times and the sum of time lengths of all the non-silence audio frames.

In this embodiment, the evaluation sub-unit 22 is further configured to calculate the audio quality evaluation information Q by applying the following formula:

$$Q = Q_c - a_3 \cdot Q_c \cdot e^{a_4 LR},$$

where $Q_c$ is the code compression quality information, LR is the loss frequency, and $a_3$ and $a_4$ are separately a preset coefficient.

In this embodiment, the packet loss status information is an average loss length; and the evaluation sub-unit 22 is further configured to determine an average loss length of the non-silence audio data packet in the to-be-evaluated audio stream, and generate the audio quality evaluation information according to the code compression quality information and the average loss length.

In this embodiment, the evaluation sub-unit 22 is further configured to determine a lost non-silence audio data packet in the to-be-evaluated audio stream, determine a sum of time lengths of the lost non-silence audio data packet, determine the number of loss times of the non-silence audio data packet in the to-be-evaluated audio stream, and generate the average loss length according to the sum of time lengths and the number of loss times.

In this embodiment, the evaluation sub-unit 22 is further configured to calculate the audio quality evaluation information Q by applying the following formula:

$$Q = Q_c - a_5 \cdot Q_c \cdot e^{a_6 LD},$$

where $Q_c$ is the code compression quality information, LD is the average loss length, and $a_5$ and $a_6$ are separately a preset coefficient.

In the method and the apparatus for evaluating audio stream quality according to this embodiment of the present invention, because a silence audio data packet does not include any useful information, audio stream quality evaluation is performed only on a non-silence audio data packet in a to-be-evaluated audio streamsilence, which can avoid impact of a silence part on evaluation of audio quality, thereby improving accuracy of evaluating audio stream quality. In addition, the method and the apparatus for evaluating audio stream quality according to this embodiment of the present invention have low complexity in calculation, are applicable to an audio stream with payload encryption, and can be widely applied to evaluation and monitoring of quality of a network audio stream and a multimedia stream.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. A method for evaluating audio stream quality, comprising:

   determining a non-silence audio data packet in a to-be-evaluated audio stream, wherein the to-be-evaluated audio stream comprises at least one non-silence audio data packet, and each non-silence audio data packet comprises at least one non-silence audio frame; and
   evaluating the non-silence audio data packet in the to-be-evaluated audio stream to generate audio quality evaluation information.

2. The method for evaluating audio stream quality according to claim 1, wherein the evaluating the non-silence audio data packet in the to-be-evaluated audio stream to generate audio quality evaluation information comprises:

   determining a bit rate of the non-silence audio data packet in the to-be-evaluated audio stream, and acquiring code compression quality information according to the bit rate; and
   determining packet loss status information of the non-silence audio data packet in the to-be-evaluated audio stream, and generating the audio quality evaluation information according to the code compression quality information and the packet loss status information.

3. The method for evaluating audio stream quality according to claim 2, wherein the determining a bit rate of the non-silence audio data packet in the to-be-evaluated audio stream is specifically:

   determining a sum of bits of all non-silence audio frames comprised in the non-silence audio data packet in the to-be-evaluated audio stream and a sum of time lengths of all the non-silence audio frames, and generating the bit rate according to the sum of bits and the sum of time lengths.

4. The method for evaluating audio stream quality according to claim 2 or 3, wherein the packet loss status information is a packet loss rate; and
   the determining packet loss status information of the non-silence audio data packet in the to-be-evaluated audio stream, and generating the audio quality evaluation information according to the code compression quality information and the packet loss status information is specifically:

   determining a packet loss rate of the non-silence audio data packet in the to-be-evaluated audio stream, and generating the audio quality evaluation information according to the code compression quality information and the packet loss rate.

5. The method for evaluating audio stream quality according to claim 4, wherein the determining a packet loss rate of the non-silence audio data packet in the to-be-evaluated audio stream is specifically:

   determining the total number of lost audio data packets and the number of lost silence audio data packets in the to-be-evaluated audio stream, determining the number of lost non-silence audio data packets according to the total number of the lost audio data packets and the number of the lost silence audio data packets, and generating the packet loss rate according to the number of the lost non-silence audio data packets and the number of non-silence audio data packets in the to-be-evaluated audio stream.

6. The method for evaluating audio stream quality according to claim 4, wherein the generating the audio quality evaluation information according to the code compression quality information and the packet loss rate is specifically:

calculating the audio quality evaluation information Q by applying the following formula:

$$Q = Q_c - a_1 \cdot Q_c \cdot e^{a_2 PLR},$$

wherein $Q_c$ is the code compression quality information, PLR is the packet loss rate, and $a_1$ and $a_2$ are separately a preset coefficient.

7. The method for evaluating audio stream quality according to claim 2 or 3, wherein the packet loss status information is loss frequency; and
the determining packet loss status information of the non-silence audio data packet in the to-be-evaluated audio stream, and generating the audio quality evaluation information according to the code compression quality information and the packet loss status information is specifically:

determining loss frequency of the non-silence audio data packet in the to-be-evaluated audio stream, and generating the audio quality evaluation information according to the code compression quality information and the loss frequency.

8. The method for evaluating audio stream quality according to claim 7, wherein the determining loss frequency of the non-silence audio data packet in the to-be-evaluated audio stream is specifically:

determining the number of loss times of the non-silence audio data packet in the to-be-evaluated audio stream, determining the sum of time lengths of all the non-silence audio frames comprised in the non-silence audio data packet in the to-be-evaluated audio stream, and generating the loss frequency according to the number of loss times and the sum of time lengths of all the non-silence audio frames.

9. The method for evaluating audio stream quality according to claim 7, wherein the generating the audio quality evaluation information according to the code compression quality information and the loss frequency is specifically:

calculating the audio quality evaluation information Q by applying the following formula:

$$Q = Q_c - a_3 \cdot Q_c \cdot e^{a_4 LR},$$

wherein $Q_c$ is the code compression quality information, LR is the loss frequency, and $a_3$ and $a_4$ are separately a preset coefficient.

10. The method for evaluating audio stream quality according to claim 2 or 3, wherein the packet loss status information is an average loss length; and
the determining packet loss status information of the non-silence audio data packet in the to-be-evaluated audio stream, and generating the audio quality evaluation information according to the code compression quality information and the packet loss status information is specifically:

determining an average loss length of the non-silence audio data packet in the to-be-evaluated audio stream, and generating the audio quality evaluation information according to the code compression quality information and the average loss length.

11. The method for evaluating audio stream quality according to claim 10, wherein the determining an average loss length of the non-silence audio data packet in the to-be-evaluated audio stream is specifically:

determining a lost non-silence audio data packet in the to-be-evaluated audio stream, determining a sum of time lengths of the lost non-silence audio data packet, determining the number of loss times of the non-silence audio data packet in the to-be-evaluated audio stream, and generating the average loss length according to the sum of time lengths and the number of loss times.

**12.** The method for evaluating audio stream quality according to claim 10, wherein the generating the audio quality evaluation information according to the code compression quality information and the average loss length is specifically:

calculating the audio quality evaluation information Q by applying the following formula:

$$Q = Q_c - a_5 \cdot Q_c \cdot e^{a_6 LD},$$

wherein $Q_c$ is the code compression quality information, LD is the average loss length, and $a_5$ and $a_6$ are separately a preset coefficient.

**13.** An apparatus for evaluating audio stream quality, comprising:

a non-silence determining unit, configured to determine a non-silence audio data packet in a to-be-evaluated audio stream, wherein the to-be-evaluated audio stream comprises at least one non-silence audio data packet, and each non-silence audio data packet comprises at least one non-silence audio frame; and
an evaluation unit, connected to the non-silence determining unit and configured to evaluate the non-silence audio data packet in the to-be-evaluated audio stream to generate audio quality evaluation information.

**14.** The apparatus for evaluating audio stream quality according to claim 13, wherein the evaluation unit comprises:

an acquiring sub-unit, connected to the non-silence determining unit and configured to determine a bit rate of the non-silence audio data packet in the to-be-evaluated audio stream, and acquire code compression quality information according to the bit rate; and
an evaluation sub-unit, connected to the acquiring sub-unit and configured to determine packet loss status information of the non-silence audio data packet in the to-be-evaluated audio stream, and generate the audio quality evaluation information according to the code compression quality information and the packet loss status information.

**15.** The apparatus for evaluating audio stream quality according to claim 14, wherein:

the acquiring sub-unit is further configured to determine a sum of bits of all non-silence audio frames comprised in the non-silence audio data packet in the to-be-evaluated audio stream and a sum of time lengths of all the non-silence audio frames, and generate the bit rate according to the sum of bits and the sum of time lengths.

**16.** The apparatus for evaluating audio stream quality according to claim 14 or 15, wherein the packet loss status information is a packet loss rate; and
the evaluation sub-unit is further configured to determine a packet loss rate of the non-silence audio data packet in the to-be-evaluated audio stream, and generate the audio quality evaluation information according to the code compression quality information and the packet loss rate.

**17.** The apparatus for evaluating audio stream quality according to claim 16, wherein:

the evaluation sub-unit is further configured to determine the total number of lost audio data packets and the number of lost silence audio data packets in the to-be-evaluated audio stream, determine the number of lost non-silence audio data packets according to the total number of the lost audio data packets and the number of the lost silence audio data packets, and generate the packet loss rate according to the number of the lost non-silence audio data packets and the number of non-silence audio data packets in the to-be-evaluated audio stream.

**18.** The apparatus for evaluating audio stream quality according to claim 16, wherein:

the evaluation sub-unit is further configured to calculate the audio quality evaluation information Q by applying the following formula:

$$Q = Q_c - a_1 \cdot Q_c \cdot e^{a_2 PLR},$$

wherein $Q_c$ is the code compression quality information, PLR is the packet loss rate, and $a_1$ and $a_2$ are separately a preset coefficient.

19. The apparatus for evaluating audio stream quality according to claim 14 or 15, wherein the packet loss status information is loss frequency; and
the evaluation sub-unit is further configured to determine loss frequency of the non-silence audio data packet in the to-be-evaluated audio stream, and generate the audio quality evaluation information according to the code compression quality information and the loss frequency.

20. The apparatus for evaluating audio stream quality according to claim 19, wherein:

the evaluation sub-unit is further configured to determine the number of loss times of the non-silence audio data packet in the to-be-evaluated audio stream, determine the sum of time lengths of all the non-silence audio frames comprised in the non-silence audio data packet in the to-be-evaluated audio stream, and generate the loss frequency according to the number of loss times and the sum of time lengths of all the non-silence audio frames.

21. The apparatus for evaluating audio stream quality according to claim 19, wherein:

the evaluation sub-unit is further configured to calculate the audio quality evaluation information Q by applying the following formula:

$$Q = Q_c - a_3 \cdot Q_c \cdot e^{a_4 LR},$$

wherein $Q_c$ is the code compression quality information, LR is the loss frequency, and $a_3$ and $a_4$ are separately a preset coefficient.

22. The apparatus for evaluating audio stream quality according to claim 14 or 15, wherein the packet loss status information is an average loss length; and
the evaluation sub-unit is further configured to determine an average loss length of the non-silence audio data packet in the to-be-evaluated audio stream, and generate the audio quality evaluation information according to the code compression quality information and the average loss length.

23. The apparatus for evaluating audio stream quality according to claim 22, wherein:

the evaluation sub-unit is further configured to determine a lost non-silence audio data packet in the to-be-evaluated audio stream, determine a sum of time lengths of the lost non-silence audio data packet, determine the number of loss times of the non-silence audio data packet in the to-be-evaluated audio stream, and generate the average loss length according to the sum of time lengths and the number of loss times.

24. The apparatus for evaluating audio stream quality according to claim 22, wherein:

the evaluation sub-unit is further configured to calculate the audio quality evaluation information Q by applying the following formula:

$$Q = Q_c - a_5 \cdot Q_c \cdot e^{a_6 LD},$$

wherein $Q_c$ is the code compression quality information, LD is the average loss length, and $a_5$ and $a_6$ are separately a preset coefficient.

Determine a non-silence audio data packet in a to-be-evaluated audio stream | 10

Evaluate the non-silence audio data packet in the to-be-evaluated audio stream to generate audio quality evaluation information | 20

FIG. 1

Determine a non-silence audio data packet in a to-be-evaluated audio stream | 10

Determine a bit rate of the non-mute audio data packet in the to-be-evaluated audio stream, and acquire code compression quality information according to the bit rate | 201

Determine packet loss status information of the non-silence audio data packet in the to-be-evaluated audio stream, and generate audio quality evaluation information according to the code compression quality information and the packet loss status information | 202

FIG. 2

FIG. 3

FIG. 4

# INTERNATIONAL SEARCH REPORT

| | International application No. |
|---|---|
| | **PCT/CN2013/081071** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G10L 25/-; G10L 19/-; H04L 12/-; H04M 11/-; H04Q 7/-; H01L 12/-

Documentation searched other than minimum documentation to the extent that such documents are included in the fields searched

Electronic data base consulted during the international search (name of data base and, where practicable, search terms used)

CNKI, WPI, EPODOC, SIPOABS, CNABS: voice, assess, mute, blank, code rate, packet loss rate, packet loss frequency, duration, audio+, quality, evaluat, bland+, bit rate+, los+, package+

**C. DOCUMENTS CONSIDERED TO BE RELEVANT**

| Category* | Citation of document, with indication, where appropriate, of the relevant passages | Relevant to claim No. |
|---|---|---|
| Y | CN 102057634 A (NIPPON TELEGRAPH AND TELEPHONE CORP.), 11 May 2011 (11.05.2011), description, paragraphs [0008] and [0037]-[0045] | 1-5, 7-8, 10-11, 13-17, 19-20, 22-23 |
| Y | CN 101292459 A (ERICSSON TELEFON AB LM), 22 October 2008 (22.10.2008), description, page 8, line 20 to page 10, line 20 | 1-5, 7-8, 10-11, 13-17, 19-20, 22-23 |
| A | CN 102448083 A (ZTE CORP.), 09 May 2012 (09.05.2012), the whole document | 1-24 |
| A | CN 1538667 A (WUHAN UNIVERSITY), 20 October 2004 (20.10.2004), the whole document | 1-24 |
| A | JP 2005-26901 A (NIPPON DENKI ENG KK), 27 January 2005 (27.01.2005), the whole document | 1-24 |
| A | JP 2008-92520 A (NIPPON TELEGRAPH AND TELEPHONE CORP.), 17 April 2008 (17.04.2008), the whole document | 1-24 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 October 2013 (22.10.2013) | **21 November 2013 (21.11.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **BIAN, Xishuang** Telephone No.: (86-10) **82245781** |

Form PCT/ISA/210 (second sheet) (July 2009)

**INTERNATIONAL SEARCH REPORT**
Information on patent family members

International application No.

**PCT/CN2013/081071**

| Patent Documents referred in the Report | Publication Date | Patent Family | Publication Date |
|---|---|---|---|
| CN 102057634 A | 11.05.2011 | IN 201004571 P2 | 04.02.2011 |
| | | US 2011075852 A1 | 31.03.2011 |
| | | KR 20110015623 A | 16.02.2011 |
| | | KR 1224171 B1 | 21.01.2013 |
| | | RU 2010150154 A | 20.07.2012 |
| | | EP 2288087 A1 | 23.02.2011 |
| | | RU 2461972 C2 | 20.09.2012 |
| | | JP 5123384 B2 | 23.01.2013 |
| | | WO 2009150932 A1 | 17.12.2009 |
| CN 101292459 A | 22.10.2008 | WO 2007045273 A1 | 26.04.2007 |
| | | EP 1938496 A1 | 02.07.2008 |
| | | EP 1938496 B1 | 01.09.2010 |
| | | US 2009170499 A1 | 02.07.2009 |
| | | CN 101292459 B | 08.06.2011 |
| | | DE 602005023357 D1 | 14.10.2010 |
| | | US 8145205 B2 | 27.03.2012 |
| | | AT 480063 T | 15.09.2010 |
| | | DK 1938496 T | 13.12.2010 |
| CN 102448083 A | 09.05.2012 | WO 2012048590 A1 | 19.04.2012 |
| CN 1538667 A | 20.10.2004 | CN 100347988 C | 07.11.2007 |
| JP 2005-26901 A | 27.01.2005 | None | |
| JP 2008-92520 A | 17.04.2008 | JP 4294673 B | 15.07.2009 |

Form PCT/ISA/210 (patent family annex) (July 2009)

# INTERNATIONAL SEARCH REPORT

International application No.

**PCT/CN2013/081071**

**CONTINUATION: CLASSIFICATION OF SUBJECT MATTER**

H04L 12/26 (2006.01) i

G10L 25/27 (2013.01) i

G10L 19/00 (2013.01) i

Form PCT/ISA/210 (extra sheet) (July 2009)